# EUROPEAN PATENT SPECIFICATION

(11) **EP 1 241 830 B1**
(45) Date of publication and mention of the grant of the patent: **27.10.2004**
(21) Application number: 01106565.3
(22) Date of filing: 15.03.2001
(51) Int. Cl.: H04L 12/28, H04Q 7/22

(54) **Management of event information data with a mobile communications device**
Verwaltung von Ereignisinformationsdaten mit einem mobilen Kommunikationsgerät
Gestion de données d'information d'évènement avec un dispositif de communication mobile

(43) Date of publication of application: 18.09.2002
(73) Proprietor: Sony International (Europe) GmbH, 10785 Berlin (DE)
(72) Inventor: Kovacs, Ernö, c/o Sony International Europe) GmbH, 70327 Stuttgart (DE); Hohl, Fritz, c/o Sony International Europe) GmbH, 70327 Stuttgart (DE)
(74) Representative: Rupp, Christian, Dipl.Phys.

(56) References cited:
- EP-A- 0 924 916
- WO-A-97/41654
- WO-A-98/08314
- US-A- 6 157 841

## Description

The present invention relates to a method for managing event information data, to a computer software program product for implementing such a method as well as to a mobile communication device having an event managing module.

Different systems are known from the prior art filtering events according to the user's profile and the current date, e.g. by using personal agents. Furthermore many static lists or events are e.g. available in the Internet. Furtheron, there are systems that allow to send event notifications and reminders to specific user groups. Finally, calendar systems allow to enter events, to organise events as well as to retrieve events.

However, all known systems suffer of a plurality of different drawbacks. E.g. neither the location aspect of an event nor the time aspect for travelling to the location of an event is considered.

In view of these disadvantages it is the object of the present invention to propose a technique allowing a correlated time and position management of event information.

WO 97/41654 discloses a telecommunication and information dissemination system for a disseminating information to subscribers of a mobile telecommunications network from at least one information source containing data which is updated continuously or at intervals.

WO 98/08314 shows a method and apparatus for providing position-related information to mobile recipients.

This object is achieved by means of the features of the independent claims. The dependent claims develop further the central idea of the present invention.

According to a first aspect of the present invention therefore a method for managing event information data is proposed. The current time in the position of a mobile communication device is inquired. Using the current time in position information to generate a template an event source such as e.g. an event database is queried. The event source contains events entries parameterized by the category, time and location. Finally a list of accessible events is presented on the mobile communication device, wherein the list of accessible events is generated by means of the query. The accessible events are calculated taking into account the differences between the starting time and the location of an event and the current time and position of the mobile communications device.

Optionally profile information on the user of the mobile communication device can be part of the template used for the query of the event source.

At least for apart of the accessible events a transportation information for possible ways to get from the current position of the mobile communication device to an event location can be calculated and presented on the mobile communication device.

The list of accessible events can be presented dynamically. In other words, the list of accessible events can be updated to generate a list of remaining accessible events each time the user of the mobile communication device accepts an event of the list. When generating the updated version of the event list, the parameters (time, location, etc.) of events already accepted by the user are taken into account.

Accessible events accepted by the user of the mobile communication device can be automatically transferred as entries to an electronic calendar file.

The user of the mobile communication device can create events for the list of accessible events and/or for the event source (e.g. event database).

This can e.g. be achieved by creating events manually by customising generic events proposed by the mobile communication device.

A learning mode be provided in which the mobile communication device learns event preferences of the user by evaluating the interaction with the user.

The user can pre-configure standing orders for events such that corresponding events are automatically selected when retrieved in the event source.

The event entries of the event source can be generated automatically by searching a network such as e.g. the Internet.

According to a further aspect of the present invention a computer software program product is proposed implementing a method as said above when run on a mobile computing device.

According to a still further aspect of the present invention a mobile communication device with an event managing module is proposed. The event managing module comprises means for determining the actual time and the current geographical position of the mobile communication device. Furthermore means for querying an internal and/or external event source are present. The event source contains event entries parameterized by category, time and location. A query can be performed on the basis of a template, containing at least the current time and geographical position of the mobile communication device. Finally means for presenting a list of accessible events output by the querying means are provided.

The template used by the querying means can furthermore comprise profile information of the user of the mobile communication device.

Furthermore the mobile communication device can comprise a navigation module for calculating and presenting possible ways to get from the current position of the mobile communication device to the location of an event.

Computing means can update the list of accessible events dynamically to generate a list of remaining accessible events each time the user of the mobile communication device accepts a proposed event from the list.

Finally means for automatically transferring accessible events accepted by the user of the mobile communication device as entries to an electronic calendar file can be present.

Further advantages, features and objects of the present invention will become evident for the man skilled in the art when the readings of the following detailed description of an embodiment taken in conjunction with the figures of the enclosed drawings.
Figure 1 shows a schematic representation of a system of implementing the present invention,
Figure 2 shows schematically the adaptation of the events, and
Figure 3 shows schematically a possible distribution structure for implementing the present invention.

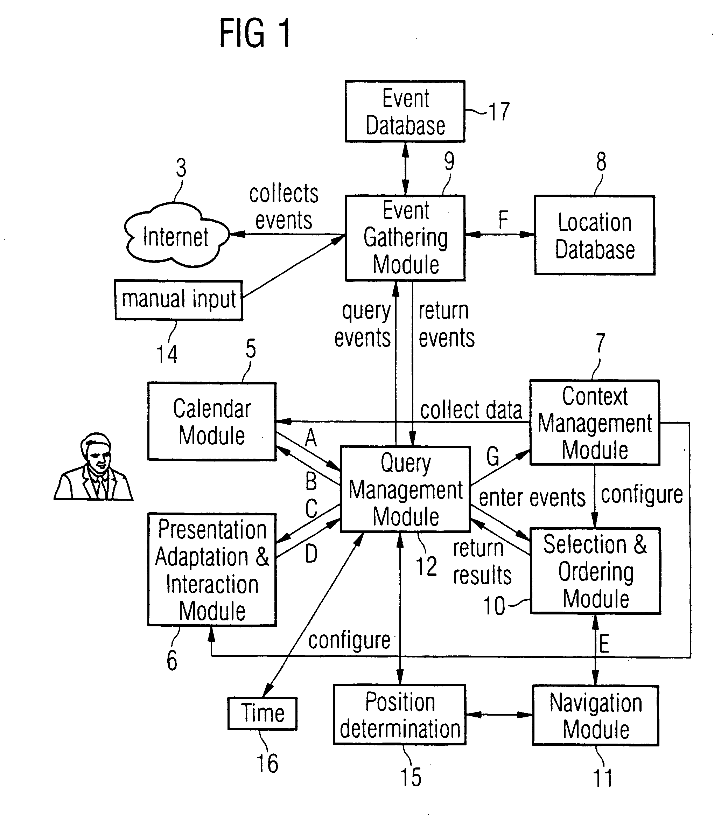

With reference to Figure 1 at first a system for implementing the present invention will be explained.

To this objective at first some externs and impressions will be explained. An "event" in the sense of the present invention is a social gathering or activity which usually has a certain start time, a time duration and therefore also an end time. In contrast to meetings of another gathering of a number of people is important, but a purpose of the invent, which requires certain sources (e.g. a film projector, a certain location, etc.) which are available only at certain places. Therefore an event happens at a certain location. A user has to get to this location from the current location which usually takes some time. Furthermore resources like transportation means maybe necessary. Events are attended by a certain number of people. Events can be described as a structure like:

Event purpose, location, date, start time, duration, attendees.

A "template" is an event specification which consists of a number of specified attributes. An example of a template is:
"film performance", Hedelfinger Str. 61 + 5 km, 24.10.00, 18:00 GMT

A "query" is a task to select a synchronously, i.e. while the user is waiting for the result.

A "standing order" is a task to select events to inform the user about the occorns of these events as synchronously, i.e. while the user is disconnected to the system.

Now, the components of a system for implementing the present invention will be explained for severance to Figure 1.

A query management module 12 manages the queries and standing orders of users. In case of a query, the query management module receives this task from a presentation adaptation and interaction module (PIAM) 6, asks the event gathering module 9 for events fitting into the template of the task, and sends these events to a selection and ordering module 10. After having received the results from the selection and ordering module 10, the query management module 12 forwards them to the PIAM 6 for display on a mobile communication's device. To allow some interaction steps, the query management module 12 stores all data concerning the query in order to react to the user's interactions. There are two possible interaction steps. If a user accepts events proposed by the system, these events are entered into the calendar module 5 and the query is re-processed by sending again the events to the selection and ordering module 10 etc. As there are now more time restrictions, the result returned from the selection and ordering module 10 to the query management module 10 might differ from the first step. If a user removes (waives) an event in the calendar module 5, the query management module 12 is notified and the query is re-processed to generate again new results returned from the selection and ordering module 10 to the query management module 12.

In the case of a standing order the query management module 12 receives this task from the PIAM 6. It asks the event gathering module 9 to inform the query management module 12 in case of the occurrence of an event fitting into the template. The processing of this task is then stopped, but all data concerning the task is stored in the query management module 12. As soon as the event gathering module 9 notifies the query management 12 on the occurrence of corresponding events, the query management module 12 sends the events to the selection and ordering module 10, receiving in turn the result which is a list of accessible events. The query management module 12 asks the presentation adaptation and interaction module 6 (PIAM) to inform the user on the result using the means the user selected.

Finally the query management module 12 forwards view selection information from the PIAM 6 to the context management module 7 when appropriate.

In the following the function of the event gathering module 9 will be explained. This component gathers events and delivers sets of events that match a given template. There are several possibilities for the event gathering module 9 to gather events. One is to search appropriate information sources when events are needed, e.g. by using a search engine in the Internet 3 by consulting event web pages in the Internet 3. Another possibility is to subscribe to appropriate event sources, such that the event gathering module 9 is informed on the occurrence of new events. In order to react queries quickly, the event gathering module 9 can proactively search information sources (Internet 3 etc.) even without already knowing tasks. Thereto it can employ an own event database 17 to store events. In order to allow third parties to directly insert events manually, the event gathering module 9 can offer a manual input interface 14 to do so.

In case of a query the event gathering module 9 receives a template from the query management module 12 and answers it by returning a list of accessible events that fit into the template. In case of a standing order the event gathering module 9 receives a template from the query management module 12. As soon as the event gathering module 9 finds an event that fits into the template, it informs the query management module 12 by returning a list of events that fit into the template.

To fulfil its task the event gathering module 9 can access a location database 8 in order to determine the location of and the distance to retrieved events. After having accessed the location database 8, every location entry in an event is extended by the geographic position of the location. Therefore the geographic position can e.g. be stored along with the event entry in the event database 17.

The location database 8 is able to associate positions to symbolic (logic) location data as provided in the events. Such an association can be e.g.:
"Gloria 1" = 34.00078N, 4.8901W 134.3 Meter).

The first string denotes the symbolic (logic) name. The second part contains the graphic position e.g. in the WGS 84 format. Symbolic (logic) names can include names a location is known under ("Münchener Hofbräuhaus"), an address ("Hedelfingerstr. 61") and other references to locations. Symbolic (logic) names are delivered by the event gathering module 9. The location database 8 answers such a request with the corresponding geographic position.

Now the function and operation of the selection ordering module (SOM) 10 will be explained. This component gets a set of events from the query management module 12 and selects and orders events acon to a set of attributes. It answers to the query management module 12 by returning an ordered list of events. The set of attributes is requested of the context management module 7. It consists of an open set of data like:
- User preferences like
   - event categories
   - key words
   - names of preferred participants (and their roles)
   - preferred locations
- open time/location slots.

In order to determine the time distance of and the way to events, the selection and ordering module 10 can access the navigation module 11. It requests these data by delivering the a start in target location of possible transportation means.

A description of the way and an estimation of the time needed in returned from the navigation module 7.

Navigation module 11 is connected to a position determination means such as e.g. a GPS. The position determination means 15 can be furthermore connected to the query management module 12. The navigation module 11 can compute path to go from location to another one, resulting in a description of the way and the time necessary given a set of possible transportation means.

The Context Management Module 7 gathers and stores context data and delivers them to the SOM 10 in order to configure the selection and ordering process and to the PIAM 6 in order to configure the presentation adaptation and the interaction process. Context data might include:
- the location of the user
- data and time at the location of the user
- the temperature at the location of the user
- personal user data like his/her schedule
- the history of his/her service usage
- the actual condition of the network the user connects to
- the actual condition of the user device
- the user profile (e.g. age, gender, nationality, and user preferences)
- the abilities of the user device
- the social situation the user currently experiences.

Parts of these data are collected from the CM 5.

When in "learning mode" the CMM 7 tries to gather user profile information automatically by examining the interactions of the user with the service (see G in Figure 1), and , when possible, also by watching other Internet usage of this user outside the service. This information is again stored inside the CMM 7.

To allow users to use different sets of context data (e.g. to have different preferences according to the mode (business trip or holiday journey)), context data sets can be organised into different "views". The user is able to select these views using the PIAM 6 (which informs the QMM 12, which finally informs the CMM 7 about the currently selected view). When delivering context information, the currently selected view is used.

The Presentation Adaptation & Interaction Module PIAM 6 presents the results of queries and standing order to a user. This presentation is adapted according to context data like:
- Type of the used device
- the actual condition of the network
- and so on

Additionally, the PIAM 6 allows the user to do the following things:
- enter a new request
   The user can specify all relevant attributes and modes of presentation (e.g. concerning sorting etc.) This results in a query that is sent to the QMM 12.
- enter a new standing order
   The user can specify all relevant attributes. This results in a query that is sent to the QMM12.
- modify a standing order
   This is done by requesting a standing order from the QMM 12 and let the user modify it. The standing order is then resent to the QMM 12.
- watch the results of requests or standing orders
- accept an event of an event list
   In case of acceptance, the event is entered into the CM 5, then the QMM 12 is notified in order to get a new result that considers the new time/location restrictions that result from that choice.
- select a view
- select notification means

Additionally, the PIAM 6 is able to send notifications to offline users when the system detected an event that fits into a standing order.

The calendar module 5 presents a calendar-like presentation to the user. Events the user has accepted are entered into this calendar. In case of e.g. a change of mind or when exploring alternatives, a user can also waive accepted events in the calendar. In this case, the Query Management Module 12 is informed. To integrate into an existing office environment, the calendar module can be an existing product (e.g. Microsoft Outlook) as long as other programs can enter events and as long as other programs can sense the removal of events in the calendar.

Additionally, the calendar is one source of information for the context management system.

### Flows inside the system

### A query is processed

The user starts a query process at the PIAM 6. The user enters a query at the PIAM 6, thus specifying e.g. the date, time, and location of the events to get. The PIAM 6 produces a template out of that and sends it, together with other data (e.g. presentation options, and the view to use) to the QMM 12. The QMM 12 creates a query entry and stores it. Afterwards, it sends the template to the EGM 9. The EGM 9 gathers events that fit into that template, e.g. by using its internal database. It also uses the LD 8 to determine whether an event fits into the template. Finally, it extends the events that fit into the template with the geographic positions gathered from the LD 8. This set of events is returned back to the QMM 12, where it is stored in the query entry. The QMM 12 sends this set to the SOM 10. The SOM 10 applies its selection and ordering algorithm using data gathered from the CMM 7. To determine, in which time events can be reached, the SOM 10 uses the NM 11 which also delivers a description of the ways to reach the event. This description also extends the events. The SOM 10 then returns an ordered list of events back to the QMM 12. The QMM 12 sends this list to the PIAM 6, where it is presented to the user by applying the presentation adaptation mechanisms using context data from CMM 7.

The user is now able to accept events from that list or remove events in the calendar.

After having finished the query, the user stops the query process.

### The user accepts an event

If the user accepts an event in the PIAM 6, the event is sent to the CM 5 where it is entered into the calendar of that user. Additionally, the PIAM 6 sends the acceptance notification to the QMM 12, which in turn starts the selection and ordering process by sending the SOM 10 the set of event received before from the EGM 9, but where the accepted event has been removed. As the accepted event further restricts the time/location availability of the user, another list of events might result from this process (the SOM 10 will know of this restriction as it receives these context data from the CMM 7, which, in turn, queries the CM 5). As above, the new list of events is presented to the user, and the user again can accept an event.

### The user waives an event

Events in the CM 5 (i.e. accepted events) can be waived by the user at any time. In this case the event is removed from the user's calendar by the CM 5. If no query is currently processed, no further steps are taken. If currently a query is processed and the waived event is one that originated from that query, this event is sent to the QMM 12 and the whole query process is re-started. The only difference is that the event is again added to the event set stored at the QMM 12. If currently a query is processed and the waived events does not originate from that query process, the complete query process is started again by the QMM 12, i.e. also the EGM 9 is asked for events that fit into the query template.

### A standing order is entered

The user specifies a standing order at the PIAM 6 in a similar way as he/she specifies a query with the one difference that also the communication means is specified that shall be used to inform the user about the occurrence of a corresponding event. The PIAM 6 then sends this standing order to the QMM 12, where a standing order entry is generated. Finally, the QMM 12 sends the corresponding template to the EGM 9.

### A standing order is processed

If the EGM 9 finds one or more events that fit to the template of the standing order (using the LD 8 in the same way as with queries), it sends these events to the QMM 12, specifying the standing order they belong to. The QMM 12 then starts the selection and ordering process in the same way as in the query process. When the QMM 12 sends the event list to the EGM 9, it also adds the communications means specification selected by the user. Finally, the user is notified about the event list using the selected communications means by the EGM 9. The user is then able to connect to the system and to interact in the same way as during a query (i.e. accepting and waiving events).

In the following data structures for the system will be explained.

One data structure is the event and event template, respectively, as they determine which kinds of events can be found. As described above, events mainly consist of 6 elements, namely:
- event purpose
- location
- date
- start time
- duration
- list of attendees
where the event purpose might be described with a standardised language (ontology). The location can be described either by a geographic position or a symbolic name that can be replaced by the LD 8 with a geographic position.

Event templates have to offer possibilities to specify these elements in a fuzzy way. Per element, these possibilities include, apart from let an element unspecified (denoted by an "*"):

### Event purpose

Here the problem is that we may have general and more specialised categories like "performance" - "opera". Therefore we need something like a tree of categories, so an event can be described by higher-level categories. Additionally, some purposes should be described by several categories, therefore we need a list of categories describing an event.

It is obvious that we need parameters for this element, for e.g. specifying a certain film (like "Casablanca").

### Location

This element contains the geographical position of the event.

Additionally, this element may contain an "threshold:x" attribute that specified the range of x meters around this data for events that fit into that template.

### Date

This element contains the date of the event.

Additionally, this element may contain an "threshold:x" attribute that specified the range of x days around this data for events that fit into that template.

### Start time

This element contains the start time of events. If have to make sure that also the time zone of this time is encoded in order to prevent miscalculations.

Additionally, this element may contain an "threshold:x" attribute that specified the range of x seconds around this data for events that fit into that template.

### Duration

This element contains a duration e.g. in minutes.

Additionally, this element may contain an "threshold:x" attribute that specified the range of x seconds around this data for events that fit into that template.

### List of attendees

This element contains references to persons.

### Ordering

Each of the elements above might additionally contain an "ordering:n" attribute that denotes that this element shall also be used for order the event set. The parameter n of this attributes denotes the rank of the ordering element.

### Examples of event templates

**What to do now and here?**
   (event purpose=*;
   location=ORDER:1,34.7894N.85993W.374m,threshold: 10000m;
   date =19.10.00;
   start=ORDER:2,13:41 MET threshold: 3600sec;
   duration=ORDER:3, *;
   list of attendees = *)
**Planning of a day out in Paris**
   (event purpose=*;
   location=ORDER:1,17.7894N.81.993W.374m,threshold: 10000m; //was "Paris,Boulevard St. Germain"
   date = 15.11.00;
   start=ORDER:2,8:00 MET, threshold: 36000sec;
   duration =ORDER:3, *;
   list of attendees=*)
**A true fan**
   (event purpose = Music Performance of "The Jellybabies";
   location=ORDER:1,34.7894N.85.993W.374m,threshold: 50000m;
   date=*;
   start=*;
   duration = *;
   list of attendees = *)

### Specification of queries and standing orders

The easiest way to implement this aspect is certainly to offer the user an interface where he/she can specify every single element with all the given possibilities. Unfortunately, this would require the knowledge of how to specify these things. Therefore, this possibility is only suited for expert users. Additionally, especially mobile devices like mobile phone normally do offer only very restricted input possibilities (as they rarely include a keyboard and feature only small displays).

Normal users or users using this type of devices can use a restricted interface that allow to choose only of a few possibilities. One of these possibilities is the "what to do now and here" mode, where the system generates a template as described above using the current time and location taken from the CMM (which, in turn, might have sensed these information at the user's device).

The easiest way to interact with the system is to allow active suggestions based on implicitly gathered profiles as then the user does not have to further specify queries or preferences. Another possibility to help users specifying queries and standing order is to use default values also stored in the CMM.

### Gathering events:

Events can be entered directly via manual input. In this case all relevant information can be gathered easily using an appropriate form.

Events can be also gathered by searching appropriate information sources, e.g. web pages, e-mails (if this is appropriate under privacy aspects), and databases. Especially in the web, there are many pages that offer event data in a human-readable form, e.g. http://www.stuttgart.de/sixcms/list.php3?page id =25. There are also some databases in the Internet, e.g. http://www.lift-online.com/cgi/setkalender.pl where event data can be queried automatically. As there is no standard for offering such data, and as the audience for event data is normally a human one, most information sources feature an own event data format, often suited for human use. Therefore, an architecture that wants to use these information sources has to cope with the different formats, which might be also the subject of frequent, unannounced changes. The EGM 9 has then simply to translate the event data format of the information sources to the one used in the system.

In the near future, such events might be offered on sources like web servers as XML documents. In this case, the EGM has to know and to understand the corresponding DTDs.

Events are stored into an event database 17 inside or outside of the EGM 9, e.g. in XML form, in order to quickly react on queries by the QMM 12.

### Getting events from the EGM

To return a set of events that fit into a given event template, the EGM 12 has to consider all elements of an event template. An element qualifies for being included in the event set, all of its elements have to qualify. An element qualifies if it is unspecified ("*"). Whether a specified element qualifies, depends on the element:

### Event purpose

This element qualifies if the specified category is a predecessor in one of the category hierarchies of the event, and if the parameter, if specified, are equal.

### Location

This element qualifies if the geographical location of the event (as determined by the LD 8) lies in the range specified by the event template.

### Date

This element qualifies if the date of the event lies in the range specified by the event template.

### Start time

This element qualifies if the date of the event lies in the range specified by the event template.

### Duration

This element qualifies if the date of the event lies in the range specified by the event template.

### List of attendees

This element qualifies if the list of persons specified in the event template are contained in the list of attendees of the event.

### Selection and Ordering Algorithm

The selection and ordering algorithm is a two-stage process. In the first stage events out of the incoming event set are selected according to some criteria received from the CMM determined by a view selected by the user. One of these criteria is the calendar of the users: only events are selected that do not collide with existing entries. Another criteria is the time needed to reach the location of an event. Computed by the NM 11, this time need is considered when events are selected that fit into the time range of the event template.

In the second stage, the events are ordered according to the ordering criteria. These criteria are specified in the event templates.

### Presentation adaptation

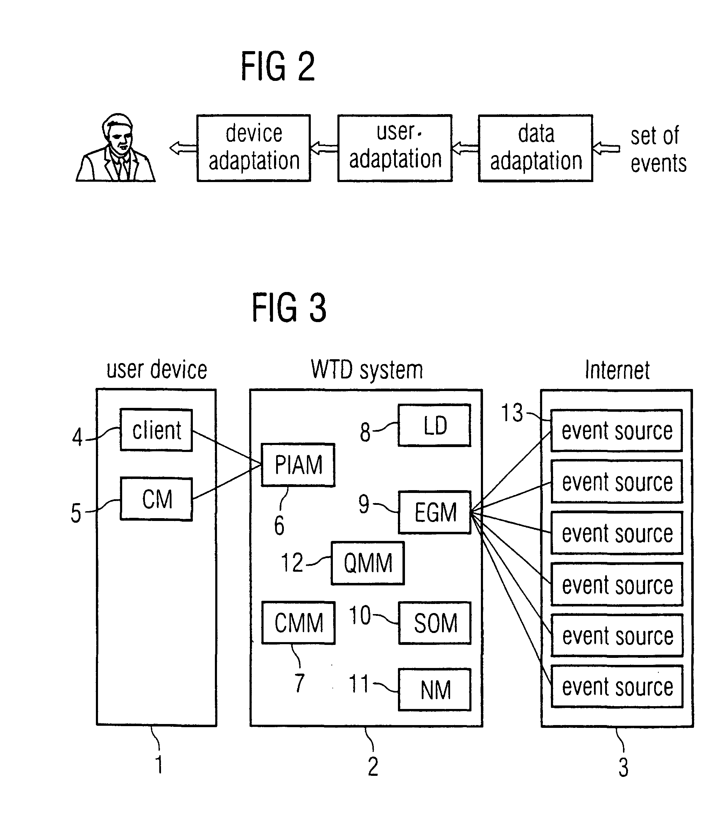

The presentation is adapted inside the PIAM 6 towards the user in relation to a whole number of factors. The presentation process consists of at least three stages (see Figure 2)

The first stage is the "data adaptation" which adapts the presentation according to the characteristics of the data (i.e. the events) itself. If an event is e.g. nearby, just the event description and the location of the event might be displayed, if an event is not nearby, but in the same city, additionally the public transport data (time tables, ways to a station) is displayed, etc. These adaptation can be realised e.g. by using a rule mechanism that is able to specify things like "if (event.location = "nearby") then show (event.desription,event.location)" or "if (event.location = "intown") then show (event. description, event. location, event. transportation. timetables)".

The second stage is the "user adaptation" which adapts the presentation in relation to the user. This includes adjustments according to the explicit settings by the user, his/her preferences that have been learned by the system, etc.

The third stage is the "device adaptation" which adapts the presentation according to the characteristics of the actual user device and the data connection to that device. This adaptation includes adjustments to things like the screen size, the colour abilities, the needed presentation format (e.g. HTML or WML), the actual bandwidth, and the condition of the network.

The components of the system could be distributed as depicted in Figure 3. The PIAM 6 component can be decomposed into a system-side PIAM module 6, and a user-device-side client program 4. The latter might consist simply of a web or a WAP browser. Alternatively, it might consist of a special client program that handles interaction of the user with the system. The CM 5 might reside on the user device; in this case it might consist of an existing calendar program (like Microsoft Outlook).

The overall system can be realised as a service of a multi-access service portal.

The EGM 9 gathering process can be realised using translator and adaptor components that translate events from the format at the source into the format that is used inside the system, and that encapsulate the querying process of the event source, respectively. It can be expected that events can be accessed in the web in an XML-based format in the future.

The EGM 9 can employ a SQL database to store the events gathered. The Event templates can then be realised by SQL statements that are used to be executed in the EGM database.

The CM 5 can be located either on the user's device, in the system, or on another computer in a connected network. The CM 5 can be e.g. realised using Microsoft Outlook using its COM interface on the user's device.

## Claims

1. A method for managing event information data,
the method comprising the following steps:
- inquiring the current time (16) and the current geographical position (15) of a mobile communications device (1),
- using the current time (16) and geographical position (15) information for a template to query (12) an event source (9), the event source (9) containing event entries parameterized by their category, time and location,
- calculating a list of events accessible for a user of the mobile communications device (1) taking into account the differences between the starting time and the location of an event and the current time and position of the mobile communications device (1) and
- presenting (6) the list of accessible events on the mobile communications device (1).

2. A method according to claim 1,
**characterized in that**
the step of calculating a list of accessible events comprises the step of taking into account transportation ressources from the current position of the mobile communications device (1) to the location of an event.

3. A method according to claim 1 or 2,
**characterized in that**
furthermore profile information of the user of the mobile communications device (1) is part of the template to query (12) the event source (9).

4. A method according to claim 1, 2 or 3,
**characterized in that**
at least for a part of the accessible events a transportation information for possible ways to get from the current position of the mobile communications device (1) to an event location is calculated (11) and presented.

5. A method according to anyone of the preceding claims,
**characterized in that**
the list of accessible events is presented (6) dynamically, i.e. the list of accessible events is updated to generate a list of remaining accessible events each time the user of the mobile communications device (1) accepts an event.

6. A method according to anyone of the preceding claims,
**characterized in that**
accessible events accepted by the user of the mobile communications device (1) are automatically transferred as entries to an electronic calendar file (5).

7. A method according to anyone of the preceding claims,
**characterized in that**
the user of the mobile communications device (1) can create events for the list of accessible events and/or for the event source (9).

8. A method according to claim 7,
**characterized in that**
the user can create (14) events by customizing manually generic events proposed by the mobile communications device (1).

9. A method according to anyone of the preceding claims,
**characterized by**
a learning mode in which the mobile communications device (1) learns event preferences of the user by evaluating the interaction with the user.

10. A method according to anyone of the preceding claims,
**characterized in that**
the user can preconfigure standing orders for events such that corresponding events are automatically selected when retrieved in the event source (9).

11. A method according to anyone of the preceding claims,
**characterized in that**
the event entries of the event source (9) are generated automatically by searching a network (3).

12. A computer software program product,
**characterized in that**
it implements a method according to anyone of the preceding claims when run on a mobile communication device (1).

13. A mobile communications device having an event managing module,
the event managing module (1, 2) comprising:
- means (15, 16) for determining the actual time and the current geographical position of the mobile communications device (1),
- means for querying (12) an internal and/or external event source (9) containing event entries parameterized by their category, time and location, wherein the querying is performed on the basis of a template containing at least the current time and geographical position of the mobile communications device (1),
- means for calculating a list of events accessible for a user of the mobile communications device (1) taking into account the differences between the starting time and the location of an event and the current time and position of the mobile communications device (1) and
- means for presenting (6) the list of accessible events.

14. A mobile communications device according to claim 13,
**characterized in that**
the means for calculating a list of accessible events take into account transportation ressources from the current position of the mobile communications device (1) to the location of an event.

15. A mobile communications device according to claim 13 or 14,
**characterized in that**
the template used by the querying means (12) furthermore comprises profile information of the user of the mobile communications device (1).

16. A mobile communications device according to anyone of claims 13 to 15,
**characterized in that**
it furthermore comprises a navigation module (11) for calculating and presenting possible
ways to get from the current position of the mobile communications device (1) to the location of an event.

17. Mobile communications device according to anyone of claims 13 to 16,
**characterized by**
a computing means (6) for updating the list of accessible events dynamically to generate a list of remaining accessible events each time the user of the mobile communications device (1) accepts an event.

18. Mobile communications device according to anyone of claims 13 to 16,
**characterized by**
means (12) for automatically transferring accessible events accepted by the user of the mobile communications device as entries to an electronic calendar file (5).

## Patentansprüche

1. Verfahren zur Verwaltung von Ereignisinformationsdaten,
wobei das Verfahren die folgenden Schritte aufweist:
- Abfragen der laufenden Zeit (16) und der laufenden geografischen Position (15) eines mobilen Kommunikationsgeräts (1),
- Verwenden der Information über die laufende Zeit (16) und geografische Position (15) für eine Schablone zur Abfrage (12) einer Ereignisquelle (9), wobei die Ereignisquelle (9) Ereigniseingaben enthält, die durch ihre Kategorie, Zeit und ihren Ort parameterisiert sind,
- Berechnen einer Liste von Ereignissen, die für einen Benutzer des mobilen Kommunikationsgeräts (1) bei Berücksichtigung der Differenzen zwischen der Startzeit und dem Ort eines Ereignisses und der laufenden Zeit und Position des mobilen Kommunikationsgeräts (1) zugreifbar sind, und
- Präsentieren (6) der Liste zugreifbarer Ereignisse auf dem mobilen Kommunikationsgerät (1).

2. Verfahren nach Anspruch 1,
**dadurch gekennzeichnet, dass**
der Schritt der Berechnung einer Liste zugreifbarer Ereignisse den Schritt einer Berücksichtigung von Transportressourcen von der laufenden Position des mobilen Kommunikationsgeräts (1) zum Ort eines Ereignisses aufweist.

3. Verfahren nach Anspruch 1 oder 2,
**dadurch gekennzeichnet, dass**
außerdem Profilinformation des Benutzers des mobilen Kommunikationsgeräts (1) Teil der Schablone zur Abfrage (12) der Ereignisquelle (9) ist.

4. Verfahren nach Anspruch 1, 2 oder 3,
**dadurch gekennzeichnet, dass**
wenigstens für einen Teil der zugreifbaren Ereignisse eine Transportinformation für mögliche Wege, um von der laufenden Position des mobilen Kommunikationsgeräts (1) zu einem Ereignisort zu kommen, berechnet (11) und präsentiert wird.

5. Verfahren nach einem der vorhergehenden Ansprüche,
**dadurch gekennzeichnet, dass**
die Liste zugreifbarer Ereignisse dynamisch präsentiert wird (6), das heißt die Liste zugreifbarer Ereignisse aktualisiert wird, um eine Liste bleibender zugreifbarer Ereignisse jedes Mal, wenn der Benutzer des mobilen Kommunikationsgeräts (1) ein Ereignis akzeptiert, zu erzeugen.

6. Verfahren nach einem der vorhergehenden Ansprüche,
**dadurch gekennzeichnet, dass**
vom Benutzer des mobilen Kommunikationsgeräts (1) akzeptierte zugreifbare Ereignisse automatisch als Eingaben in eine elektronische Kalenderdatei (5) übertragen werden.

7. Verfahren nach einem der vorhergehenden Ansprüche,
**dadurch gekennzeichnet, dass**
der Benutzer des mobilen Kommunikationsgeräts (1) Ereignisse für die Liste zugreifbarer Ereignisse und/oder für die Ereignisquelle (9) erzeugen kann.

8. Verfahren nach Anspruch 7,
**dadurch gekennzeichnet, dass**
der Benutzer Ereignisse durch manuelle kundenspezifische Anpassung auswählbarer Ereignisse, die vom mobilen Kommunikationsgerät (1) vorgeschlagen werden, erzeugen kann.

9. Verfahren nach einem der vorhergehenden Ansprüche, **gekennzeichnet durch**
einen Lernmodus, bei dem das mobile Kommunikationsgerät (1) Ereignispräferenzen des Benutzers **durch** Bewerten der Interaktion mit dem Benutzer lernt.

10. Verfahren nach einem der vorhergehenden Ansprüche,
**dadurch gekennzeichnet, dass**
der Benutzer stehende Ordnungen für Ereignisse derart vorkonfigurieren kann, dass korrespondierende Ereignisse automatisch gewählt werden, wenn sie in der Ereignisquelle (9) wieder aufgefunden werden.

11. Verfahren nach einem der vorhergehenden Ansprüche,
**dadurch gekennzeichnet, dass**
die Ereigniseingaben der Ereignisquelle (9) durch Suchen eines Netzes (3) automatisch erzeugt werden.

12. Computersoftwareprogrammprodukt,
**dadurch gekennzeichnet, dass**
es ein Verfahren gemäß einem der vorhergehenden Ansprüche implementiert, wenn es auf einem mobilen Kommunikationsgerät (1) läuft.

13. Mobiles Kommunikationsgerät, das ein Ereignisverwaltungsmodul aufweist,
wobei das Ereignisverwaltungsmodul (1, 2) aufweist:
- eine Einrichtung (15, 16) zur Bestimmung der aktuellen Zeit und der laufenden geografischen Position des mobilen Kommunikationsgeräts (1),
- eine Einrichtung zur Abfrage (12) einer internen und/oder externen Ereignisquelle (9), die durch ihre Kategorie, Zeit und ihren Ort parameterisierte Ereigniseingaben enthält, wobei die Abfrage auf der Basis einer Schablone, die wenigstens die laufende Zeit und geografische Position des mobilen Kommunikationsgeräts (1) enthält, ausgeführt wird,
- eine Einrichtung zur Berechnung einer Liste von Ereignissen, die für einen Benutzer des mobilen Kommunikationsgeräts (1) bei Berücksichtigung der Differenzen zwischen der Startzeit und dem Ort eines Ereignis und der laufenden Zeit und Position des mobilen Kommunikationsgeräts (1) zugreifbar sind, und
- eine Einrichtung zum Präsentieren (6) der Liste zugreifbarer Ereignisse.

14. Mobiles Kommunikationsgerät nach Anspruch 13,
**dadurch gekennzeichnet, dass**
die Einrichtung zur Berechnung einer Liste aus zugreifbaren Ereignissen Transportressourcen von der laufenden Position des mobilen Kommunikationsgeräts (1) zum Ort eines Ereignisses berücksichtigt.

15. Mobiles Kommunikationsgerät nach Anspruch 13 oder 14,
**dadurch gekennzeichnet, dass**
die von der Abfrageeinrichtung (12) verwendete Schablone außerdem Profilinformation des Benutzers des mobilen Kommunikationsgeräts (1) aufweist.

16. Mobiles Kommunikationsgerät nach einem der Ansprüche 13 bis 15,
**dadurch gekennzeichnet, dass**
es außerdem ein Navigationsmodul (11) zur Berechnung und Präsentierung möglicher Wege, um von der laufenden Position des mobilen Kommunikationsgerät (1) zum Ort eines Ereignisses zu kommen, aufweist.

17. Kommunikationsgerät nach einem der Ansprüche 13 bis 16, **gekennzeichnet durch**:
eine Berechnungseinrichtung (6) zur dynamischen Aktualisierung der Liste zugreifbarer Ereignisse, um eine Liste bleibender zugreifbarer Ereignisse jedes Mal, wenn der Benutzer des mobilen Kommunikationsgeräts (1) ein Ereignis akzeptiert, zu erzeugen.

18. Mobiles Kommunikationsgerät nach einem der Ansprüche 13 bis 16,
**gekennzeichnet durch**:
eine Einrichtung (12) zur automatischen Übertragung zugreifbarer Ereignisse, die vom Benutzer des mobilen Kommunikationsgeräts akzeptiert sind, als Eingaben in eine elektronische Kalenderdatei (5).

## Revendications

1. Procédé pour gérer des données d'information d'événement, le procédé comprenant les étapes qui suivent :
interrogation du temps courant (16) et de la position géographique courante (15) d'un dispositif de communication mobile (1) ;
utilisation de l'information de temps courant (16) et de position géographique courante (15) pour un gabarit afin de questionner (12) une source d'événements (9), la source d'événements (9) contenant des entrées d'événement paramétrées selon leurs catégories, leur temps et leurs localisations ;
calcul d'une liste d'événements accessibles pour un utilisateur du dispositif de communication mobile (1) en prenant en compte les différences entre le temps de début et la localisation d'un événement et le temps courant et la position du dispositif de communication mobile (1) ; et
présentation (6) de la liste d'événements accessibles sur le dispositif de communication mobile (1).

2. Procédé selon la revendication 1, **caractérisé en ce que** l'étape de calcul d'une liste d'événements accessibles comprend l'étape de prise en compte de ressources de transport depuis la position courante du dispositif de communication mobile (1) jusqu'à la localisation d'un événement.

3. Procédé selon la revendication 1 ou 2, **caractérisé en ce qu'**une information de profil supplémentaire de l'utilisateur du dispositif de communication mobile (1) est une partie du gabarit pour questionner (12) la source d'événements (9).

4. Procédé selon la revendication 1, 2 ou 3, **caractérisé en ce qu'**au moins pour une partie des événements accessibles, une information de transport pour des façons possibles d'aller depuis la position courante du dispositif de communication mobile (1) jusqu'à une localisation d'événement est calculée (11) et est présentée.

5. Procédé selon l'une quelconque des revendications précédentes, **caractérisé en ce que** la liste d'événements accessibles est présentée (6) de façon dynamique, c'est-à-dire que la liste d'événements accessibles est mise à jour afin de générer une liste d'événements accessibles restants chaque fois que l'utilisateur du dispositif de communication mobile (1) accepte un événement.

6. Procédé selon l'une quelconque des revendications précédentes, **caractérisé en ce que** des événements accessibles acceptés par l'utilisateur du dispositif de communication mobile (1) sont transférés de manière automatique en tant qu'entrées sur un fichier de calendrier électronique (5).

7. Procédé selon l'une quelconque des revendications précédentes, **caractérisé en ce que** l'utilisateur du dispositif de communication mobile (1) peut créer des événements pour la liste d'événements accessibles et/ou pour la source d'événements (9).

8. Procédé selon la revendication 7, **caractérisé en ce que** l'utilisateur peut créer (14) des événements en personnalisant manuellement des événements génériques qui sont proposés par le dispositif de communication mobile (1).

9. Procédé selon l'une quelconque des revendications précédentes, **caractérisé par** un mode apprentissage dans lequel le dispositif de communication mobile (1) apprend des préférences d'événement de l'utilisateur en évaluant l'interaction avec l'utilisateur.

10. Procédé selon l'une quelconque des revendications précédentes, **caractérisé en ce que** l'utilisateur peut préconfigurer des ordres de survenue pour des événements de telle sorte que des événements correspondants soient sélectionnés de manière automatique lors d'une recherche dans la source d'événements (9).

11. Procédé selon l'une quelconque des revendications précédentes, **caractérisé en ce que** les entrées d'événement de la source d'événements (9) sont générées de manière automatique en recherchant un réseau (3).

12. Produit de programme de logiciel d'ordinateur **caractérisé en ce qu'**il met en oeuvre un procédé selon l'une quelconque des revendications précédentes lorsqu'il est déroulé sur un dispositif de communication mobile (1).

13. Dispositif de communication mobile qui comporte un module de gestion d'événement, le module de gestion d'événement (1, 2) comprenant :
un moyen (15, 16) pour déterminer le temps réel et la position géographique courante du dispositif de communication mobile (1) ;
un moyen pour questionner (12) une source d'événements interne et/ou externe (9) qui contient des entrées d'événement paramétrées selon leurs catégories, leur temps et leurs localisations, où le questionnement est réalisé sur la base d'un gabarit qui contient au moins le temps courant et la position géographique courante du dispositif de communication mobile (1) ;
un moyen pour calculer une liste d'événements accessibles pour un utilisateur du dispositif de communication mobile (1) en prenant en compte les différences entre le temps de début et la localisation d'un événement et le temps courant et la position géographique courante du dispositif de communication mobile (1) ; et
un moyen pour présenter (6) la liste d'événements accessibles.

14. Dispositif de communication mobile selon la revendication 13, **caractérisé en ce que** le moyen pour calculer une liste d'événements accessibles prend en compte des ressources de transport depuis la position courante du dispositif de communication mobile (1) jusqu'à la localisation d'un événement.

15. Dispositif de communication mobile selon la revendication 13, **caractérisé en ce que** le gabarit qui est utilisé par le moyen de questionnement (12) comprend en outre une information de profil de l'utilisateur du dispositif de communication mobile (1).

16. Dispositif de communication mobile selon l'une quelconque des revendications 13 à 15, **caractérisé en ce qu'**il comprend en outre un module de navigation (11) pour calculer et présenter des façons possibles d'aller depuis la position courante du dispositif de communication mobile (1) jusqu'à la localisation d'un événement.

17. Dispositif de communication mobile selon l'une quelconque des revendications 13 à 16, **caractérisé par** un moyen de calcul (6) pour mettre à jour la liste d'événements accessibles de manière dynamique afin de générer une liste d'événements accessibles restants chaque fois que l'utilisateur du dispositif de communication mobile (1) accepte un événement.

18. Dispositif de communication mobile selon l'une quelconque des revendications 13 à 16, **caractérisé par** un moyen (12) pour transférer de manière automatique des événements accessibles qui sont acceptés par l'utilisateur du dispositif de communication mobile en tant qu'entrées sur un fichier de calendrier électronique (5).
